# EUROPEAN PATENT APPLICATION

(11) **EP 4 697 088 A1**
(43) Date of publication of application: **18.02.2026**
(21) Application number: 25151112.7
(22) Date of filing: 10.01.2025
(51) Int. Cl.: G02F 1/13, G02F 1/1335

(54) **DIRECT-TYPE BACKLIGHT MODULE**

(30) Priority: 16.08.2024 TW 113130784
(71) Applicant: Tan De Technology Co., Ltd., Taichung City 407 (TW)
(72) Inventor: SU, Tsung-Hao, 407 Taichung City (TW); CHEN, Hsin-Ting, 407 Taichung City (TW); LI, Shao-Jung, 407 Taichung City (TW); LEE, Chao-Pai, 407 Taichung City (TW)
(74) Representative: Melchior, Robin

(57) **Abstract**

A direct-type backlight module includes a light emitting module and a lens array unit. The light emitting module includes a plurality of light emitting units arranged in an array. The lens array unit is disposed on the light emitting module. Moreover, the lens array unit is provided with a plurality of curved surfaces corresponding to the plurality of light emitting units, respectively, and the plurality of curved surfaces are disposed on one side of the lens array unit facing the light emitting module or another side thereof opposite to the side, or on both sides of the lens array unit.

## Description

### CROSS-REFERENCE TO RELATED APPLICATIONS

This application claims the benefits of the Taiwan Patent Application Serial Number 113130784, filed on August 16, 2024, the subject matter of which is incorporated herein by reference.

### BACKGROUND

### Field of the Invention

The present invention relates to a direct-type backlight module and, more particularly, to a direct-type backlight module suitable for automotive display panels.

### Description of Related Art

As being a non-self-luminous display, the liquid crystal display must have a backlight module to provide the required light source. In recent years, according to the demand, backlight modules have been developing toward the goals of light weight, thin thickness, narrow bezel design, high performance, low cost and environmental protection. Among the aforementioned many design goals, how to achieve balance has become the key development point of the LCD industry, and how to take both the efficiency and cost reduction into account is critical in this industry.

The backlight modules of LCD displays are mainly divided into direct-type and edge-type backlight modules, wherein the light guide plate used in the edge-type backlight module requires special design, which not only increases the production cost, but also makes the problem of uneven light emission more likely, resulting in affecting the display quality.

However, how to make a direct-type backlight module satisfy the needs of liquid crystal displays and solve the aforementioned problems at a lower technical cost has become one of the current research and development priorities in the industry. Therefore, there is an urgent need to provide an improved direct-type backlight module so as to alleviate and/or obviate the aforementioned problems.

### SUMMARY OF THE INVENTION

Through the specially designed lens array unit of the present invention, which has a plurality of curved surfaces respectively correspond to a plurality of light emitting units, not only the light emission efficiency of the light emitting unit may be increased, but also the light emitting unit with lower wattage or lumens may be used instead to achieve the same display quality and the need for additional heat dissipation units is eliminated, thereby providing the effect of saving costs. In addition, by providing the first film material and the second film material and adjusting the angle between the first film material and the second film material according to the light emitting angle, the uniformity of light emission from the light emitting unit may be increased to achieve the purpose of viewing angle control thereby further improving the display quality.

In view of this, the present invention provides a direct-type backlight module, which includes a light emitting module and a lens array unit. The light emitting module includes a plurality of light emitting units arranged in an array, wherein the number of light emitting units is not particularly limited and may be adjusted according to the required light source or the size of the display panel. The plurality of light emitting units may be LEDs. The lens array unit is disposed on the light emitting module and is used to collimate the light emitted by the plurality of light emitting units. The lens array unit has a plurality of curved surface respectively corresponding to the plurality of light emitting units. The plurality of curved surfaces are disposed on one side of the lens array unit facing the light emitting module or on another side of the lens array unit opposite to the side, or disposed on both sides of the lens array unit, thereby refracting the light emitted from the light emitting unit through the corresponding curved surfaces, so that the small-area light source emitted by the light emitting unit may be diffused into a large-area light source thereby improving uniformity of light emission.

In the present invention, the direct-type backlight module may further include a plurality of lens array units disposed on the light emitting module.

In the present invention, the material of the lens array unit may be transparent polymethylmethacrylate (PMMA), polycarbonate (PC), cyclic olefin polymer (COC) or silicone, but the present invention is not limited thereto.

In the present invention, the light emitting units of the light emitting module may be arranged in an M×N array, where M and N are each an integer greater than 2. For example, M and N are each an integer between 2 and 100,000.

In the present invention, the direct-type backlight module may further include a first film material disposed on the lens array unit to improve the uniformity of light emission and achieve the purpose of viewing angle control.

In the present invention, the direct-type backlight module may further include a second film material disposed on the first film material to further improve the uniformity of light emission and achieve the purpose of viewing angle control.

In the present invention, the minimum distance between the first film material and the second film material may be between 0 mm and 5 mm, such as between 0.01 mm and 5 mm, between 0.5 mm and 5 mm, between 1 mm and 5 mm, between 3 mm and 5 mm, between 0.5 mm and 3 mm, between 1 mm and 3 mm or between 0.5 mm and 1 mm, wherein, when the minimum distance between the first film material and the second film material is 0 mm, it indicates that the first film material and the second film material are in direct contact. In the present invention, the materials of the first film material and the second film material may be lenses, transparent polyethylene terephthalate, transparent polymethylmethacrylate, polycarbonate (PC), cyclic olefin polymer (COC) or silicone, but the present invention is not limited thereto.

In the present invention, the first film material may have a plurality of first strip structures, the second film material may have a plurality of second strip structures, the plurality of first strip structures may extend in a first direction, the plurality of second strip structures may extend in a first direction, and the first direction may be different from the second direction, wherein the plurality of first strip structures may be disposed on one side of the first film material facing the light emitting module or on another side opposite to the side or on both sides, and the plurality of second strip structures may be disposed on one side of the second film material facing the light emitting module or on another side opposite to the side or on both side.

In the present invention, the plurality of first strip structures may each have a first arc surface, wherein the first arc surface may be disposed on one side of the first film material facing the light emitting module or on another side opposite to the side or both on sides. However, the present invention is not limited thereto. The plurality of first strip structures are not necessarily formed by arc surfaces, but may also be formed by a plurality of surfaces (for example, a prism formed by two surfaces) or by irregular shapes.

In the present invention, the plurality of second strip structures may each have a second arc surface, wherein the second arc surface may be disposed on one side of the second film material facing the light emitting module or on another side opposite to the side or both sides. However, the present invention is not limited thereto. The plurality of second strip structures are not necessarily formed by arc surfaces, but may also be formed by a plurality of surfaces (for example, a prism formed by two surfaces) or by irregular shapes.

In the present invention, the first direction may intersect the second direction to form an angle, and the angle may be between 0° and 90°, such as between 0° and 75°, between 0° and 60°, between 0° and 45°, between 0° and 30°, between 0° and 15°, between 15° and 90°, between 15° and 75°, between 15° and 60°, between 15° and 45°, between 15° and 30°, between 30° and 90°, between 30° and 75°, between 30° and 60°, between 30° and 45°, between 45° and 90° , between 45° and 75°, between 45° and 60°, between 60° to 90°, between 60° to 75°, about 0°, about 15°, about 30°, about 45°, about 60°, about 75° or about 90°.

In the present invention, the lens array unit may have a plurality of protrusions and a plurality of recesses, and one of the plurality of protrusions may include one of a plurality of curved surfaces and may be surrounded by a plurality of adjacent recesses. For example, one of the plurality of protrusions may include one of the plurality of curved surfaces and may be surrounded by three to six adjacent recesses. At this moment, in a top view direction, one of the plurality of protrusions may have triangular, quadrilateral, pentagonal or hexagonal shape. In one embodiment of the present invention, one of the plurality of protrusions may include one of the plurality of curved surfaces and may be surrounded by four adjacent recesses. At this moment, in a top view direction, one of the plurality of protrusions may have a quadrilateral shape.

In the present invention, the curvature of the plurality of curved surfaces may be between -5 mm and 5 mm, such as between -5 mm and 3 mm, between -5 mm and 1 mm, between -5 mm and 0 mm, between -5 mm and -1 mm, between -5 mm and -3 mm, between -3 mm and 5 mm, between -3 mm and 3 mm, between -3 mm and 1 mm, between -3 mm and 0 mm, between -3 mm and -1 mm, between -1 mm and 5 mm, between -1 mm and 3 mm, between -1 mm and 1 mm, between -1 mm and 0 mm, between 0 mm and 5 mm, between 0 mm and 3 mm between, between 0 mm and 1 mm, between 1 mm and 5 mm, between 1 mm and 3 mm, between 3 mm and 5 mm, approximately -5 mm, approximately -3 mm, approximately -1 mm, approximately 1 mm, approximately 3 mm, or approximately 5 mm. Alternatively, the curvature of the plurality of curved surfaces may be between 0 mm and 5 mm, such as between 0 mm and 5 mm, between 1 mm and 5 mm, between 3 mm and 5 mm, approximately 1 mm, approximately 3 mm or approximately 5 mm.

In the present invention, the thickness of the lens array unit may be between 0.1 mm and 20 mm, such as between 0.3 mm and 20 mm, between 0.5 mm and 20 mm, between 1 mm and 20 mm , between 5 mm and 20 mm, between 10 mm and 20 mm, between 0.1 mm and 15 mm, between 0.3 mm and 15 mm, between 0.5 mm and 15 mm, between 1 mm and 15 mm, between 5 mm and 15 mm, between 10 mm and 15 mm, between 0.1 mm and 10 mm, between 0.3 mm and 10 mm, between 0.5 mm and 10 mm, between 1 mm and 10 mm, between 5 mm and 10 mm, approximately 1 mm, approximately 3 mm, approximately 5 mm, approximately 10 mm, approximately 12 mm, approximately 15 mm or approximately 20 mm.

In the present invention, the minimum distance between the lens array unit and the light emitting module may be between 0 mm and 10 mm, such as between 0.1 mm and 10 mm, between 0.3 mm and 10 mm, between 0.5 mm and 10 mm, between 1 mm and 10 mm, between 3 mm and 10 mm, between 5 mm and 10 mm, between 0.1 mm and 7 mm, between 0.3 mm and 7 mm, between 0.5 mm and 7 mm, between 1 mm and 7 mm, between 0.1 mm and 5 mm, between 0.3 mm and 5 mm, between 0.5 mm and 5 mm, between 1 mm and 5 mm, between 3 mm and 5 mm, approximately 0.1 mm, approximately 0.3 mm, approximately 0.5 mm, approximately 1 mm, approximately 3 mm, approximately 5 mm, approximately 7 mm or approximately 10 mm. When the minimum distance between the lens array unit and the light emitting module is 0 mm, it indicates that the lens array unit and the light emitting module are in direct contact. The lens array unit may be formed by using high temperature-resistant materials, for example, silicone.

In the present invention, the minimum distance between the lens array unit and the first film material may be between 0 mm and 5 mm, such as between 0.01 mm and 5 mm, between 0.5 mm and 5 mm, between 1 mm and 5 mm, between 3 mm and 5 mm, between 0.5 mm and 3 mm, between 1 mm and 3 mm, or between 0.5 mm and 1 mm. When the minimum distance between the lens array unit and the first film material is 0 mm, it indicates that the lens array unit is in direct contact with the first film material.

Other novel features of the disclosure will become more apparent from the following detailed description when taken in conjunction with the accompanying drawings.

### BRIEF DESCRIPTION OF THE DRAWINGS

FIG. 1 shows a schematic diagram of a direct-type backlight module according to the first embodiment of the present invention;
FIG. 2 shows a cross-sectional view of the direct-type backlight module according to the first embodiment of the present invention;
FIG. 3 shows a cross-sectional view of a direct-type backlight module according to the second embodiment of the present invention; and
FIG. 4 shows the viewing-angle brightness diagram of the direct-type backlight module according to the first embodiment of the present invention.

### DETAILED DESCRIPTION OF THE INVENTION

The following provides different embodiments of the present invention. These embodiments are used to illustrate the technical content of the present invention, rather than to limit the claims of the present invention. A feature of one embodiment can be applied to other embodiments through suitable modification, substitution, combination, and separation.

It should be noted that, in the specification and claims, unless otherwise specified, having "one" element is not limited to having a single said element, but one or more said elements may be provided.

In addition, in the specification and claims, unless otherwise specified, ordinal numbers, such as "first" and "second", used herein are intended to distinguish components rather than disclose explicitly or implicitly that names of the components bear the wording of the ordinal numbers. The ordinal numbers do not imply what order a component and another component are in terms of space, time or steps of a manufacturing method. A "first" element and a "second" element may appear together in the same component, or separately in different components. The existence of an element with a larger ordinal number does not necessarily mean the existence of another element with a smaller ordinal number.

In the specification and claims, unless otherwise specified, the feature A "or" or "and/or" feature B means that feature A exists alone, feature B exists alone, or feature A and feature B exist at the same time. The feature A "and" or "with" or "plus" feature B refers to the simultaneous existence of feature A and feature B. The term "comprise", "include", "have" or "contain" refers to include but not limited to.

In addition, in the specification and claims, the term "upper", "lower" or "between" is only used to describe the relative positions of multiple elements, and can be extended to include translation, rotation, or mirroring in interpretation.

It should be noted that, in the specification and claims, unless otherwise specified, "one element being on another element" or similar statements do not necessarily mean that the element is in contact with the other element.

In addition, in the specification and claims, unless otherwise specified, a numerical value may cover a range of ±10% of the numerical value, especially a range of ±5% of the numerical value. Unless otherwise specified, a numerical range is composed of sub-ranges defined by smaller endpoints, smaller quartiles, medians, larger quartiles, and larger endpoints.

### First Embodiment

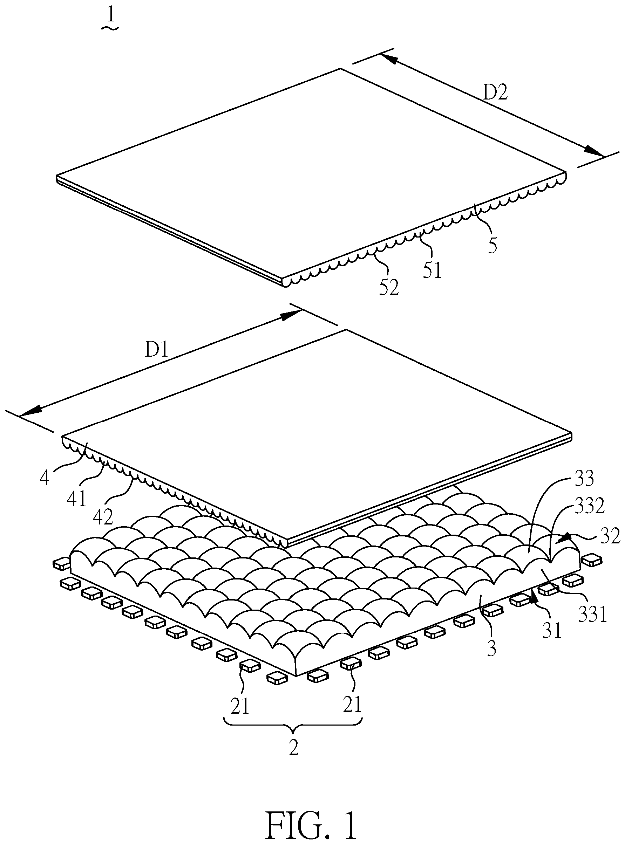

FIG. 1 shows a schematic diagram of a direct-type backlight module according to the first embodiment of the present invention.

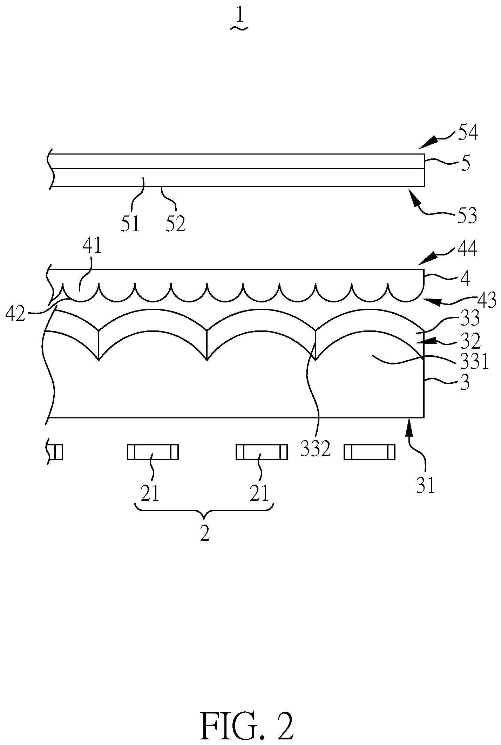

FIG. 2 shows a cross-sectional view of the direct-type backlight module according to the first embodiment of the present invention.

As shown in FIG. 1 and FIG. 2, the direct-type backlight module 1 of the present invention includes a light emitting module 2, a lens array unit 3, a first film material 4 and a second film material 5. The light emitting module 2 includes a plurality of light emitting units 21 arranged in an array. The number of the light emitting units 21 is not particularly limited and may be adjusted according to the required light source to be provided or the size of the display panel to be used. In this embodiment, the plurality of light emitting units 21 of the light emitting module 2 are arranged in a 10×10 array, but the present invention is not limited thereto. In addition, in this embodiment, the number of lens array units is one.

The lens array unit 3 is disposed between the light emitting module 2 and the first film material 4 for collimating the light emitted by the plurality of light emitting units 21. The lens array unit 3 has a light incident side 31, a light emission side 32, a plurality of curved surfaces 33, a plurality of protrusions 331 and a plurality of recesses 332. One of the plurality of protrusions 331 may include one of the plurality of curved surfaces 33 and may be surrounded by a plurality of recesses 332 adjacent thereto. The plurality of curved surfaces 33 correspond to the plurality of light emitting units 21, respectively, and are disposed at the light emission side 32; that is, the plurality of curved surface 33 is disposed on one side opposite to the side of the lens array unit 3 facing the light emitting module 2. However, the present invention is not limited thereto. According to the design conditions, the plurality of curved surface 33 may be disposed solely on the light incident side 31 or the light emission side of the lens array unit 3, and may also be disposed simultaneously on the light incident side 31 or the light emission side of the lens array unit 3. In this embodiment, one of the plurality of protrusions 331 may include one of the plurality of curved surfaces 33 and may be surrounded by four adjacent recesses 332.

In addition, the first film material 4 is disposed on the lens array unit 3, and has a plurality of first strip structures 41. The plurality of first strip structures 41 extend in the first direction D1, and each has a first arc surface 42. The first arc surface 42 is provided on one side of the first film material 4 facing the light emitting module 2 (that is, the light incident side 43). However, the present invention is not limited thereto. According to the design conditions, the arc surfaces 42 of the plurality of first strip structures may be provided solely on the light incident side 43 or the light emission side 44, and may also be provided simultaneously on the light incident side 43 and the light emission side 44. The second film material 5 is disposed on the first film material 4, and has a plurality of second strip structures 51. The plurality of second strip structures 51 extend in the second direction D2, and each has a second arc surface 52. The arc surface 52 is disposed on one side of the second film material 5 facing the light emitting module 2 (that is, the light incident side 53). However, the present invention is not limited thereto. According to the design conditions, the second arc surfaces 52 of the plurality of second strip structures 51 may be provided solely on the light incident side 53 or the light emission side 54, and may also be provided simultaneously on the light incident side 53 and the light emission side 54. The first strip structure 41 of the first film material 4 and the second strip structure 51 of the second film material 5 may be formed by hot pressing, but the present invention is not limited thereto. The first direction D1 is different from the second direction D2. In this embodiment, the angle between the first direction D1 and the second direction D2 is 90°.

In this embodiment, the plurality of light emitting units 21 are LEDs, the first film material 4 and the second film material 5 are each transparent polymethylmethacrylate, the minimum distance 5 between the first film material 4 and the second film material may be between 0.01 mm and 5 mm, the lens array unit 3 is made of transparent polymethylmethacrylate, the curvature of the lens array unit 3 on the light incident side 31 may be between -3 mm and 3 mm, the thickness of the lens array unit 3 may be 15 mm, the minimum distance between the lens array unit 3 and the light emitting module 2 may be 5 mm, and the curvature of the plurality of curved surfaces 33 may be between 0 mm and 3 mm. In addition, the lens array unit 3 and the first film material 4 are in direct contact. In order to prevent the curved surfaces 33 of the lens array unit 3 from being blocked by the first film material 4 and being unable to display its characteristics, the lens array unit 3 shown in FIG. 1 is not in direct contact with the first film material 4.

### Second Embodiment

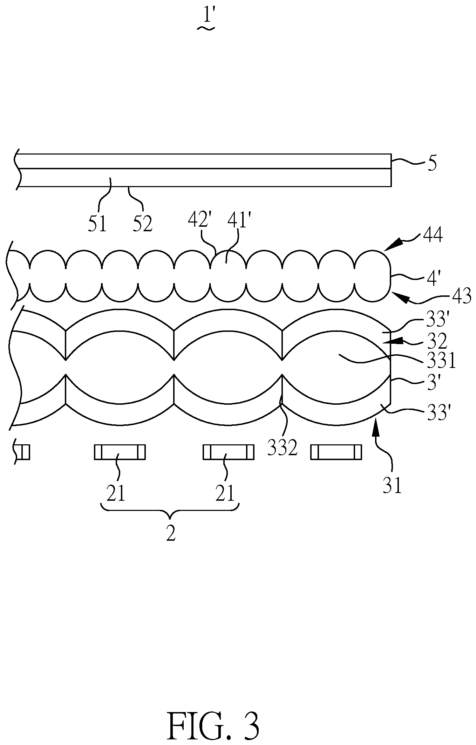

FIG. 3 shows a cross-sectional view of a direct-type backlight module according to the second embodiment of the present invention.

As shown in FIG. 3, the direct-type backlight module 1' of the second embodiment is similar to the direct-type backlight module 1 of the first embodiment, except that the plurality of curved surfaces 33' of the lens array unit 3' of the direct-type backlight module 1' of this embodiment respectively correspond to the plurality of light emitting units 21 and are disposed on the light incident side 31 and the light emission side 32 at the same time, so that the light emitting unit 21 may use the curved surface 33' of the light incident side 31 to emit light, or use the curved surface 33' on the light emission side 32 to perform refraction, or make the curved surface 33' on both the light emission side and light incident side contribute to the refraction, wherein the curved surfaces 33' corresponding to the light incident side 31 and the light emission side 32 may be the same or different, for example, each having a curvature of between -3 mm and 3 mm. In addition, the first film material 4' has a plurality of first strip structures 41', each of the plurality of first strip structures 41' has a first arc surface 42', and the first arc surfaces 42' are simultaneously provided at the light incident side 43 and the light emission side 44 of the first film material 4'.

### Third Embodiment

The direct-type backlight module of the third embodiment is similar to the direct-type backlight module 1 of the first embodiment, except that, in the direct-type backlight module of this embodiment, the first film material and the second film material are in direct contact, the lens array unit and the light emitting module are in direct contact, and the minimum distance between the lens array unit and the first film material may be between 0.01 mm and 5 mm.

### Fourth Embodiment

The direct-type backlight module of the fourth embodiment is similar to the direct-type backlight module of the first embodiment, except that the direct-type backlight module of this embodiment includes two lens array units. In other embodiments, the number of the plurality of lens array units may be 1 to 6 depending on actual requirements.

### Experimental Results

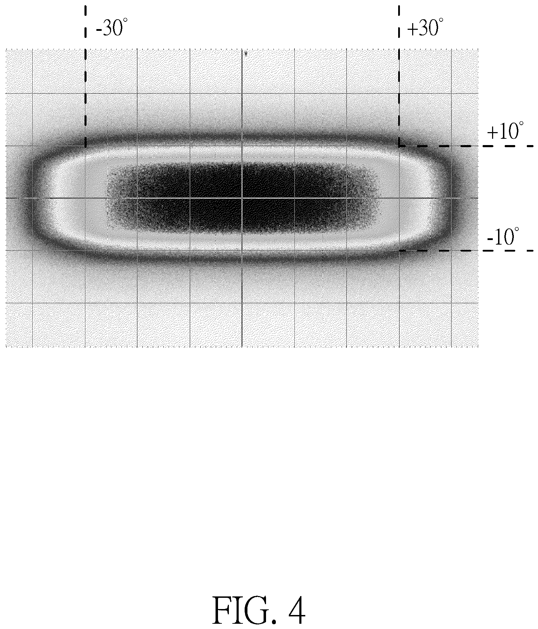

FIG. 4 shows the viewing-angle brightness diagram of the direct-type backlight module according to the first embodiment of the present invention.

With reference to FIG. 4, as well as FIG. 1 to FIG. 2, based on the above design, the light emitted from the light emitting unit 21 of the direct-type backlight module 1 of the first embodiment is refracted through the curved surface 33 on the light emission side, and the uniformity of light emission may be further improved and the purpose of viewing angle control may be achieved through the arrangement of the first film material 4 and the second film material 5. In addition, not only the light emission efficiency of the light emitting unit 21 reaches 80%, but also the light emitting unit 21 with lower wattage or lumens may be used instead to achieve the same display quality and the need for additional heat dissipation units is eliminated, thereby providing the effect of saving costs. In addition, by adjusting the angle between the first film material 4 and the second film material 5 according to the light emitting angle, the uniformity of light emission from the light emitting unit 21 may be increased to achieve the purpose of viewing angle control thereby further improving the display quality.

On the other hand, the direct-type backlight module 1 of this embodiment may reach the light pattern control requirement having -35° to 35° in horizontal direction and -10° to 10° in vertical direction, and the light pattern may be further controlled by adjusting the angle between the first film material 4 and the second film material 5. Through the light pattern control, a light emitting unit 21 with lower wattage may be selected and used to achieve the advantage of higher light emission efficiency.

The aforementioned specific embodiments should be construed as merely illustrative, and not limiting the rest of the present disclosure in any way.

## Claims

1. A direct-type backlight module, comprising:
a light emitting module including a plurality of light emitting units, wherein the light emitting units are arranged in an array; and
a lens array unit disposed on the light emitting module, wherein the lens array unit has a plurality of curved surfaces, the plurality of curved surfaces respectively correspond to the plurality of light emitting units, and the plurality of curved surfaces are disposed on one side of the lens array unit facing the light emitting module or another side opposite to the side, or disposed on both sides of the lens array unit.

2. The direct-type backlight module as claimed in claim 1, further comprising a plurality of lens array units disposed on the light emitting module.

3. The direct-type backlight module as claimed in claim 1, further includes a first film material disposed on the lens array unit.

4. The direct-type backlight module as claimed in claim 3, further comprising a second film material disposed on the first film material.

5. The direct-type backlight module as claimed in claim 4, wherein a minimum distance between the first film material and the second film material is between 0 mm and 5 mm.

6. The direct-type backlight module as claimed in claim 4, wherein the first film material has a plurality of first strip structures, the second film material has a plurality of second strip structures, the plurality of first strip structures extend in a first direction, the plurality of second strip structures extend in a second direction, and the first direction is different from the second direction.

7. The direct-type backlight module as claimed in claim 6, wherein there is an angle between the first direction and the second direction, and the angle is between 0° and 90°.

8. The direct-type backlight module as claimed in claim 3, wherein the first film material has a plurality of first strip structures, and the plurality of first strip structures are disposed on one side of the first film material facing the light emitting module, another side thereof opposite to the side, or both sides.

9. The direct-type backlight module as claimed in claim 4, wherein the second film material has a plurality of second strip structures, and the plurality of second strip structures are disposed on one side of the second film material facing the light emitting module, another side thereof opposite to the side, or both sides thereof.

10. The direct-type backlight module as claimed in claim 1, wherein the lens array unit has a plurality of protrusions and a plurality of recesses, and one of the plurality of protrusions includes one of the plurality of curved surfaces and is surrounded by the plurality of recesses.

11. The direct-type backlight module as claimed in claim 1, wherein a curvature of the plurality of curved surfaces is between -5 mm and 5 mm.

12. The direct-type backlight module as claimed in claim 1, wherein a curvature of the plurality of curved surfaces is between 0 mm and 5 mm.

13. The direct-type backlight module as claimed in claim 1, wherein a thickness of the lens array unit is between 0.1 mm and 20 mm.

14. The direct-type backlight module as claimed in claim 1, wherein a minimum distance between the lens array unit and the light emitting module is between 0 mm and 10 mm.

15. The direct backlight module as claimed in claim 3, wherein a minimum distance between the lens array unit and the first film material is between 0 mm and 5 mm.
